Europäisches Patentamt

European Patent Office

Office européen des brevets

(19)

(11) Veröffentlichungsnummer: **0 225 485**
**B1**

(12)

# EUROPÄISCHE PATENTSCHRIFT

(45) Veröffentlichungstag der Patentschrift:
07.02.90

(51) Int. Cl.⁴: **F16F 1/36**, B29D 31/00

(21) Anmeldenummer: 86115384.9

(22) Anmeldetag: 06.11.86

(54) **Blattfeder aus Faser-Kunststoff-Verbundwerkstoff.**

(30) Priorität: 14.11.85 AT 3317/85

(43) Veröffentlichungstag der Anmeldung:
16.06.87 Patentblatt 87/25

(45) Bekanntmachung des Hinweises auf die Patenterteilung:
07.02.90 Patentblatt 90/6

(84) Benannte Vertragsstaaten:
BE DE ES FR GB IT NL SE

(56) Entgegenhaltungen:
EP-A- 0 065 087
EP-A- 0 158 623
GB-A- 2 100 835
GB-A- 2 125 929
US-A- 3 900 357

(73) Patentinhaber: Kofler, Walter, Dr.,
Tschiggfreystrasse 40, A-6020 Innsbruck(AT)

(72) Erfinder: Kofler, Walter, Dr., Tschiggfreystrasse 40,
A-6020 Innsbruck(AT)

(74) Vertreter: Torggler, Paul, Dr. et al,
Wilhelm-Greil-Strasse 16, A-6020 Innsbruck(AT)

## Beschreibung

Die Erfindung bezieht sich auf eine Blattfeder aus Faser-Kunststoff-Verbundwerkstoff, mit einer in Längsrichtung von einem Bereich maximaler Dicke, vorzugsweise nach beiden Seiten hin abnehmenden Dicke und vorzugsweise über die ganze Länge gleichen Breite, bestehend aus mehreren übereinander angeordneten, in einer Kunstharzmatrix eingebetteten Faserstofflagen, wobei äußere, sich über die ganze Länge der Blattfeder erstreckende, den Zug- und Druckzonen zugeordnete Faserstofflagen und Kürzere innere Faserstofflagen mit in Richtung zur neutralen Zone abgestufter Länge vorgesehen sind und im Bereich zwischen der neutralen Zone und der Zug- bzw. Druckzone zusätzlich zu den abgestuften inneren Faserstofflagen auch Faserstoffzwischenlagen angeordnet sind, deren Länge größer ist als die Länge der benachbarten inneren Faserstofflagen.

Es wurde bereits mehrfach vorgeschlagen, Blattfedern aus Faser-Kunststoff-Verbundwerkstoffen herzustellen und anstelle von geschichteten Blattfedern (Parabelfedern) aus Stahl, beispielsweise für Nutzfahrzeuge, einzusetzen (vgl. z.B. US-A 3 900 357). Betrachtet man die Biegeschwellspannungen und die Anzahl der Lastspiele, die z.B. eine Blattfeder aus Glasfaser-Epoxidharz-Verbundwerkstoff erträgt, dann wäre dies ein durchaus erreichbares Ziel, wobei die Faserstoff-Kunstharz-Verbund-Blattfeder gegenüber der Stahl-Blattfeder den großen Vorteil von etwa 50 % Gewichtseinsparung aufweist.

Kritisch sind aber in Blattfedern aus Faser-Kunststoff-Verbundwerkstoffen die Schubspannungen, die in den Ebenen der Faserstofflagen bzw. zwischen den Faserstofflagen auftreten. Diese Schubspannungen nehmen bei biegebeanspruchten Blattfedern von den äußeren Druck- und Zugzonen der Blattfeder in Richtung zur neutralen Zone (Neutralebene, Mittelebene) und vom Bereich maximaler Dicke der Blattfeder bis zu den Federenden zu. Diese Spannungsspitzen an den Federenden und die Tatsache, daß bei Faser-Kunststoff-Verbundwerkstoffen die interlaminare Schubschwellenfestigkeit relativ gering ist (sie ist kleiner als die Biegeschwellenfestigkeit), führt häufig zu einem Aufplatzen des Faser-Kunststoff-Verbundkörpers entlang der neutralen Zone.

Auf das Problem der Schubspannungen in Faser-KunststoffVerbund-Blattfedern weisen auch neueste Veröffentlichungen hin, enthalten aber keine Lösungsvorschläge (Zeitschrift "Kunststoffe" 75 1985, Nr. 6, S. 355 ff). Zur Lösung des Problems wurde beispielsweise vorgeschlagen, durch senkrecht zur Federoberfläche angeordnete, in Federlängsrichtung verlaufende Faserlagen ein Aufplatzen der Faser-Kunststoff-Verbund-Blattfeder zu verhindern (EP-A 65 087). Eine solche Konstruktion ist jedoch zu aufwendig in der Herstellung und daher von der Kostenseite für große Serien nicht geeignet.

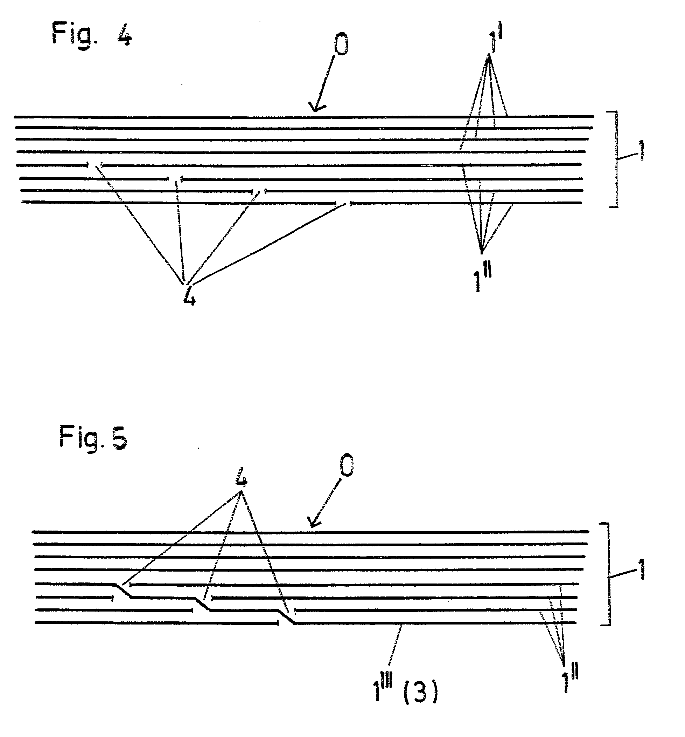

Ein anderer bekannter Lösungsvorschlag sieht vor, daß im Bereich zwischen der neutralen Zone und der Zug- und Druckzone zusätzlich zu den abgestuften inneren Faserstofflagen auch Faserstoffwischenlagen angeordnet sind, deren Länge größer ist als die Länge der benachbarten inneren Faserstofflagen (EP-A 158 623, Fig. 5). Diese Maßnahme bringt eine gegenüber einer herkömmlichen Anordnung der Faserstofflagen (z.B. gemäß Fig. 4 der US-A 3 900 357) bessere Verteilung der Schubspannungen über die Höhe und Länge der Blattfeder, und zwar im Sinne eines Abbaues der Schubspannungsspitzen in der neutralen Zone und im Bereich der Federenden.

Aufgabe der Erfindung ist es, eine solche Blattfeder aus Faser-Kunststoff-Verbundwerkstoffen herzustellen, bei der die unter Biegebeanspruchung und insbesondere auch durch Drehmomente an der Mitteleinspannung der Blattfeder auftretenden Schubspannungen besser beherrscht werden und ein Aufplatzen der Blattfeder entlang der Mittelebene bei den üblichen Belastungen vermieden werden.

Dies wird erfindungsgemäß dadurch erreicht, daß die Länge der Faserstoffinnenlagen in Richtung zur neutralen Zone zunächst abnimmt und dann bis zur neutralen Zone wieder zunimmt und daß sowohl im Innenlagenbereich abnehmender Länge als auch Innenlagenbereich zunehmender Länge Faserstoffzwischenlagen angeordnet sind, die eine größere Länge als die benachbarten Faserstoffinnenlagen aufweisen.

Die erfindungsgemäße Blattfeder wird aus einbautechnischen Gründen und Gründen günstiger Materialausnützung zweckmäßig von rechteckigem Umriß (Grundriß) und als "Träger gleicher Festigkeit" ausgebildet, was einen parabolischen Verlauf der Dicke der Blattfeder über deren Länge bedeutet. Vorwiegend wird auch die erfindungsgemäße Blattfeder als "zweiarmige" Blattfeder, auch "Halbelliptikfeder" genannt, zum Einsatz gelangen. Die erfindungsgemäße Maßnahme gestattet ferner die für Blattfedern, gleichgültig ob aus Stahl oder Faser-Kunststoff-Verbundwerkstoff, übliche Dimensionierung, wonach die maximale Dicke der Blattfeder (bei Halbelliptikfedern in der Mitte) doppelt so groß ist wie die Dicke am Federende. Dies bedeutet üblicherweise bei einer Blattfeder aus Faser-Kunststoff-Verbundwerkstoff, daß die Hälfte der gesamten Faserstofflagen als äußere durchgehende Faserstofflagen (oben und unten) angeordnet werden. Bei der erfindungsgemäßen Blattfeder ist es aber durchaus möglich, die Anzahl der äußeren Faserstofflagen zu verringern und die entsprechende Anzahl als Zwischenlagen ins Innere des Federkörpers zu verlegen. Es reichen nämlich je nach Federtype, Federlänge und vorgesehener Belastung für die Außenschicht in der Zug und Druckzone auch 6O – 70 % der durchgehenden Faserstofflagen aus. Bis zu 30 – 40 % der durchgehenden Faserstofflagen können daher als Faserstoffzwischenlagen im Inneren des Federkörpers verwendet werden.

Eine zusätzliche Möglichkeit, die Schubspannungen im Bereich der Federenden zu verringern und die Schubspannungsspitzen abzubauen, besteht gemäß einem weiteren Merkmal der Erfindung darin, daß ein Teil der Faserstofflagen der Zug- und Druckzone und/oder der inneren Faserstoffzwischenlagen im Bereich der Längsenden, insbesondere im Bereich der Krafteinleitungsvorrichtung und vorzugsweise in unterschiedlichen Abständen vom Federende quer unterbrochen ist, wobei der Abstand der Trennstellen vom Federende umso größer ist, je weiter die betreffende äußere Faserstofflage von der Oberfläche der Feder entfernt ist.

Dies ist tragbar, da einerseits Teile der Krafteinleitungsvorrichtung die Federenden verstärken und weil die Federenden – wenn ihre Dicke wie üblich gleich der Hälfte der maximalen Dicke (Mitteldicke) der Blattfeder ist – ohnehin überdimensioniert sind, daher die Unterbrechung einiger der äußeren Faserstoffschichten praktisch weder die Biegesteifigkeit der Blattfeder beeinflußt, noch die Bruchgefahr erhöht.

Ebenfalls im Sinne einer Verringerung der Schubspannungen bzw. deren schädlicher Auswirkungen im Bereich der Federenden wirkt die fakultative Maßnahme, daß eine oder mehrere der am weitesten von der Oberfläche der Feder entfernten, durchgehenden äußeren Faserstofflagen und/oder eine oder mehrere der durchgehenden inneren Faserstoffzwischenlagen mit ihrem Endbereich durch die Trennstellen der getrennten Faserstofflagen hindurch näher an die Oberfläche der Feder geführt sind.

Die Erfindung wird nachstehend anhand von Ausführungsbeispielen in den Zeichnungen näher erläutert.

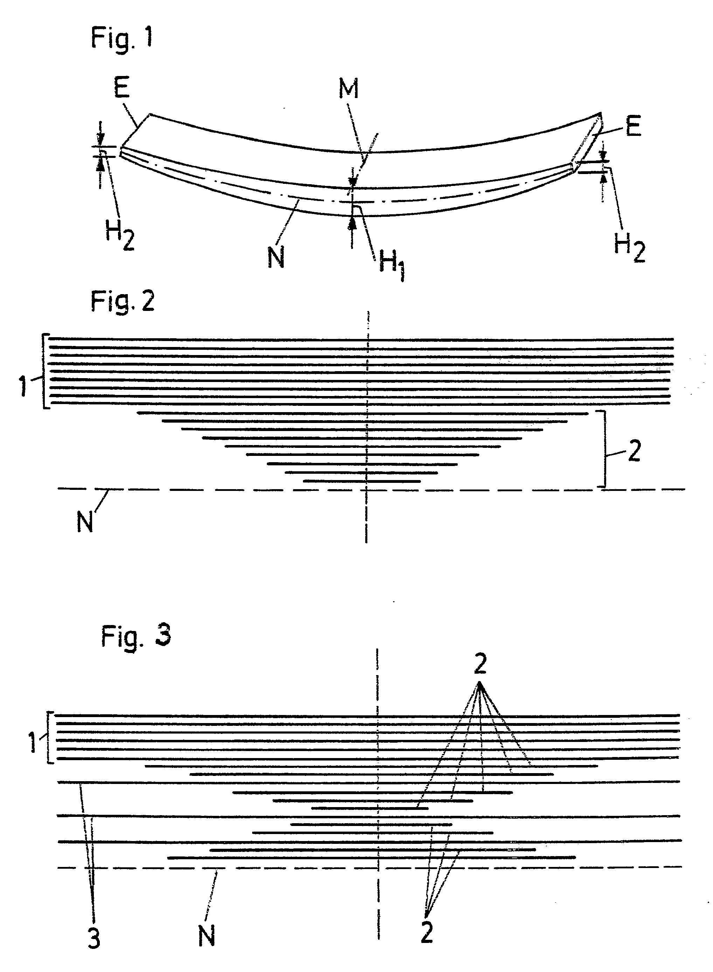

Fig. 1 zeigt in schaubildlicher Darstellung eine erfindungsgemäße Faser-Kunststoff-Verbund-Blattfeder.

Fig. 2 zeigt schematisch eine bekannte Anordnung von Faserstofflagen. In Fig. 3 – 5 sind schematisch verschiedene Ausführungsbeispiele von erfindungsgemäßen Anordnungen der Faserstofflagen dargestellt. In den Fig. 2 und 3 ist jeweils nur die Hälfte der Faserstofflagen einer Blattfeder oberhalb der neutralen Zone dargestellt. Die andere (untere) Hälfte der Faserstofflagen kann spiegelbildlich in bezug auf die neutrale Zone aufgebaut sein. In Fig. 4 und 5 sind lediglich die Faserstofflagen der (oberen) äußeren Zone der Blattfeder dargestellt.

Die Blattfeder gemäß Fig. 1 ist eine doppelarmige Blattfeder (Halbelliptikblattfeder), die bei entsprechender Dimensionierung insbesondere zur Anwendung bei Kraftfahrzeugen geeignet ist. Der Umriß der in Fig. 1 dargestellten Blattfeder ist rechteckig und die Höhe (Dicke) nimmt von einer maximalen Höhe $H_1$ in der Mitte M der Blattfeder zu den beiden Längsenden H hin auf die Höhe $H_2$, welche halb so groß ist wie die Höhe $H_1$, ab, und zwar nach einem parabolischen Verlauf. Die Lage der neutralen Zone N bei Biegebelastungen der Blattfeder ist in Fig. 1 durch eine strich-punkt-förmige Linie markiert.

Die Blattfeder besteht aus einem Faser-Kunststoff-Verbundwerkstoff, beispielsweise aus einem Glasfaser-Epoxidharz-Verbund mit mehreren übereinander liegenden Faserstofflagen, die in einer Matrix aus Kunstharz eingebettet sind. Die Faserstofflagen können aus Rovings, Geweben, z.B. aus einem in Federlängsrichtung orientierten Unidirektionalgewebe od. dgl. bestehen.

Die Faserstofflagen können unmittelbar vor dem Einlegen in die Preßform mit dem Kunstharz getränkt werden oder aber auch als Prepregs verarbeitet werden.

Die Anordnung der Faserstofflagen gemäß bekanntem Stand der Technik ist aus Fig. 2 ersichtlich. Demnach sind zu beiden Seiten der neutralen Zone W äußere Faserstofflagen 1 vorhanden, die über die ganze Länge der Blattfeder durchgehend verlaufen. Innerhalb der äußeren Faserstofflagen 1 sind kürzere innere Faserstofflagen 2 mit in Richtung zur neutralen Zone abgestufter Länge vorgesehen.

Gemäß der Erfindung werden nun – wie aus Fig. 3 ersichtlich – zwischen einzelnen der abgestuften inneren Faserstofflagen 2 Faserstoffzwischenlagen 3 angeordnet, die über die Länge der Blattfeder durchgehend verlaufen. Die Anzahl der äußeren in den Zug- und Druckzonen angeordneten durchgehenden Faserstofflagen 1 ist gegenüber dem Ausführungsbeispiel gemäß Fig. 1 (Stand der Technik) verringert. Statt dessen ist aber eine entsprechende Anzahl von durchgehenden Faserstofflagen in Form von Faserstoffzwischenlagen 3 vorhanden. Obgleich die Faserstoffzwischenlagen 3 von der Oberfläche der Blattfeder weiter entfernt sind als die äußeren Faserstofflagen 1, tragen dennoch auch die Faserstoffzwischenlagen 3 zur Festigkeit der Außenzonen bei, da diese Zwischenlagen immerhin auch noch einen mehr oder weniger großen Abstand von der neutralen Zone N aufweisen.

Die gestuften Faserstofflagen sind so geschichtet, daß die kürzesten Faserstofflagen in der Mitte zwischen der neutralen Zone N und den äußeren Faserstofflagen 1 zu liegen kommen. Mit einer derartigen Anordnung der Faserstofflagen werden insbesondere auch die nicht unerheblichen Schubspannungen beherrscht, die beiderseits der Mitteleinspannung der Blattfeder von Drehmomenten hervorgerufen werden, die etwa bei Blattfedern, welche auch Achsführungsaufgaben übernehmen müssen, durch die Brems- und Anfahrmanöver entstehen.

Wie bereits ausgeführt, besteht eine weitere Möglichkeit, die Schubspannungen an den Federenden zu verringern, darin, daß auch die an sich durchgehenden Faserstofflagen im Bereich der Enden unterbrochen werden. Dieser Fall ist beispielsweise in Fig. 4 veranschaulicht. Die äußersten Faserstofflagen 1, bleiben ohne Unterbrechung; bei den übrigen (1") sind die Trennstellen 4 von vorne oben nach hinten unten gestaffelt. In Fig. 4 und 5 sind lediglich die äußeren, der Federoberfläche 0 benachbarten Faserstofflagen 1 dargestellt. Die inneren Faserstofflagen bzw. die Faserstoffzwischenlagen können beispielsweise wie in Fig. 3 angeordnet werden.

Bei einer Unterbrechung der äußeren Faserstofflagen 1 im Bereich der Federenden kann gemäß Fig. 5 die am weitesten von der Oberfläche 0 der Feder entfernte (mit 1"') bezeichnete), innerste von den äußeren Faserstofflagen durch die Trennstellen 4 der darüberliegenden Faserstofflagen 1" hindurch nach außen versetzt werden. Die mit ihrem Ende nach außen versetzte Faserstofflage 1', könnte auch die äußerste der erfindungsgemäßen Faserstoffzwischenlagen 3 sein. Es können ferner auch zwei oder mehrere übereinanderliegende durchgehende Faserstofflagen, wie die einzelne Faserstofflage 1', mit ihrem Ende in der in Fig. 5 dargestellten Weise nach außen versetzt werden. Schließlich besteht auch die Möglichkeit, eine oder mehrere Faserstofflagen von einer Seite der Mittelebene auf die andere zu führen. Auch ein Versetzen von wenigen Millimetern verhindert ein Aufplatzen des Federkörpers entlang der am meisten auf Schub belasteten Mittelebene. Die versetzten Faserstofflagen können durch die auftretenden Schubkräfte nicht zerreißen. Bei zu großen Belastungen wird sich die Bruchlinie entlang dieser versetzten Faserstofflage fortsetzen, führt jedoch dann in Bereiche mit niedrigerer Schubspannung, sodaß zur Zerstörung größere Kräfte notwendig wären, die Blattfeder also haltbarer wird.

Eine weitere (an sich bekannte) Möglichkeit, eine Blattfeder aus Faser-Kunststoff-Verbundwerkstoff dauerhafter zu machen, besteht darin, die Faserstofflagen bezogen auf die Mittelebene der Blattfeder unsymmetrisch anzuordnen, sei es bezüglich der äußeren durchgehenden Faserstofflagen, sei es bezüglich der Anordnung der abgestuften inneren Faserstofflagen. Die Erfahrung zeigt, daß eine Blattfeder aus Faser-Verbundwerkstoff, beispielsweise aus Glasfaser-Kunststoff, sofern sie bei vielfacher Belastung nicht in der Längsmittelebene aufplatzt, sich langsam auf der Zugseite auflöst. Zuerst lösen sich an den Außenkanten der Zugseite einzelne Fasern, Faserstränge oder auch mehr oder weniger dicke Schichten vom Federkörper. Dies ist ein Zeichen dafür, daß die Dehnung an der Zugseite etwas zu groß ist, während die Druckseite hingegen nicht maximal belastet ist. Durch eine bezüglich der Längsmittelebene der Blattfeder unsymmetrische Anordnung der Faserstofflagen zugunsten der Zugseite kann bei gleicher Belastung die prozentuale Dehnung der Zugseite verkleinert, die prozentuale Stauchung der Druckseite jedoch vergrößert werden. Diese unsymmetrische Anordnung der Faserstofflagen kann mit einer Schichtung der inneren Faserstofflagen gemäß Fig. 3 Kombiniert werden. Durch diese Kombination der unsymmetrischen Anordnung der Faserstofflagen mit dem erfindungsgemäßen Schichtungssystem ist die neutrale Zone nicht mehr eindeutig definiert, d.h. sie wird etwas "diffus". Dies wirkt sich ebenfalls im Sinne einer Verminderung der Schubspannungsspitzen am Federende aus.

Durch die erfindungsgemäßen Maßnahmen lassen sich Blattfedern aus Faser-Verbundwerkstoffen so auslegen, daß sie bei der dynamischen Prüfung bzw. in der Praxis im statistischen Durchschnitt – bei Überbeanspruchung zu gleichen Teilen durch Aufplatzen in Längsrichtung bzw.. durch Zerstörung der Zug- oder Druckzone unbrauchbar werden. Das eingesetzte Material ist dann optimal ausgenützt und die Blattfeder am haltbarsten.

Welche konkrete Anordnung der Faserstofflagen im Rahmen der erfindungsgemäßen Lehre gewählt wird, hängt von mehreren Faktoren ab, wie beispielsweise vom Verhältnis der Federlänge zur Federdicke, von der Federform bei Vollast (noch positiv gekrümmt, plan oder negativ gekrümmt), ferner ob es sich um eine achsführende oder nichtachsführende Feder handelt, etc.

**Patentansprüche**

1. Blattfeder aus Faser-Kunststoff-Verbundwerkstoff, mit einer in Längsrichtung von einem Bereich maximaler Dicke vorzugsweise nach beiden Seiten hin abnehmenden Dicke und vorzugsweise über die ganze Länge gleichen Breite, bestehend aus mehreren übereinander angeordneten, in einer Kunstharzmatrix eingebetteten Faserstofflagen (1, 2, 3), wobei äußere, sich über die ganze Länge der Blattfeder erstreckende, den Zug- und Druckzonen zugeordnete Faserstofflagen (1) und kürzere, innere Faserstofflagen (2) mit in Richtung zur neutralen Zone abgestufter Länge vorgesehen sind und im Bereich zwischen der neutralen Zone (N) und der Zug- bzw. Druckzone zusätzlich zu den abgestuften inneren Faserstofflagen (2) auch Faserstoffzwischenlagen (3, 3') angeordnet sind, deren Länge größer ist als die Länge der benachbarten inneren Faserstofflagen (2), dadurch gekennzeichnet, daß die Länge der Faserstoffinnenlagen (2) in Richtung zur neutralen Zone (N) zunächst abnimmt und dann bis zur neutralen Zone (N) wieder zunimmt und daß sowohl im Innenlagenbereich abnehmender Länge als auch Innenlagenbereich zunehmender Länge Faserstoffzwischenlagen (3) angeordnet sind, die eine größere Länge als die benachbarten Faserstoffinnenlagen (2) aufweisen.

2. Blattfeder nach Anspruch 1, dadurch gekennzeichnet, daß die Länge von zumindest einzelnen der Faserstoffzwischenlagen (3) im wesentlichen gleich der Länge der äußeren Faserstofflagen (1) ist.

3. Blattfeder nach Anspruch 1 oder 2, dadurch gekennzeichnet, daß Faserstoffzwischenlagen (3') vorhanden sind, die kürzer sind als die äußeren Faserstofflagen (1).

4. Blattfeder nach Anspruch 3, gekennzeichnet durch Faserstoffzwischenlagen (3') von in Richtung zur neutralen Zone (N) abgestufter Länge.

5. Blattfeder nach einem der Ansprüche 1 bis 4, dadurch gekennzeichnet, daß die Summe der Anzahl der äußeren durchgehenden Faserstofflagen (1) und der Anzahl der inneren durchgehenden Faserstoffzwischenlagen (3) wenigstens annähernd gleich der Hälfte der Anzahl sämtlicher Faserstofflagen (1, 2, 3) ist.

6. Blattfeder nach Anspruch 5, dadurch gekennzeichnet, daß von den durchgehenden Faserstofflagen (1, 3) wenigstens 60 bis 70 % als äußere Faserstofflagen (1) und bis zu 30 bis 40 % als innere durchgehende Faserstoffzwischenlagen (3) ausgebildet sind.

7. Blattfeder nach einem der Ansprüche 1 bis 6, dadurch gekennzeichnet, daß Faserstofflagen 1, 2, 3) bezogen auf die Längsmittelebene der Blattfeder unsymmetrisch angeordnet sind.

8. Blattfeder nach Anspruch 7, dadurch gekennzeichnet, daß auf der der Zugzone zugeordneten Seite der Längsmittelebene eine größere Anzahl von durchgehenden Faserstofflagen, nämlich äußerer Faserstofflagen (1) und/oder Faserstoffzwischenlagen (3) vorgesehen ist.

9. Blattfeder nach einem der Ansprüche 1 bis 8, wobei ein Teil der Faserstofflagen (1") der Zug- und Druckzone und/oder der inneren Faserstoffzwischenlagen (3) im Bereich der Längsenden, insbesondere im Bereich der Krafteinleitungsvorrichtung und vorzugsweise in unterschiedlichen Abständen vom Federende quer unterbrochen ist, dadurch gekennzeichnet, daß der Abstand der Trennstellen (4) vom Federende umso größer ist, je weiter die betreffende äußere Faserstofflage (1") von der Oberfläche (0) der Feder entfernt ist.

10. Blattfeder nach Anspruch 9, dadurch gekennzeichnet, daß eine oder mehrere der am weitesten von der Oberfläche (0) der Feder entfernten, durchgehenden äußeren Faserstofflagen (1") und/oder eine oder mehrere der durchgehenden Faserstoffzwischenlagen (3) mit ihrem Endbereich durch die Trennstellen (4) der getrennten Faserstofflagen (1") hindurch näher an die Oberfläche der Feder geführt sind.

## Revendications

1. Ressort à lames en matériau composite à base de fibres en matière plastique, possédant une épaisseur qui diminue, de préférence des deux côtés, dans la direction longitudinale à partir d'une zone d'épaisseur maximale, et une largeur constante, de préférence sur toute sa longueur, constitué de plusieurs couches superposées en matériau fibreux (1, 2, 3), insérées dans une matrice en résine synthétique, et dans lequel sont prévues des couches extérieures en matériau fibreux (1) s'étendant sur toute la longueur du ressort à lames et associées aux zones de traction et de compression, et des couches intérieures plus courtes en matériau fibreux (2) possédant une longueur étagée en direction de la zone neutre, des couches intercalaires (3, 3') en matériau fibreux (3, 3') dont la longueur est supérieure à celle des couches intérieures voisines en matériau fibreux (2) étant également disposées, en plus des couches intérieures étagées en matériau fibreux (2), dans la partie située entre la zone neutre (N) et la zone de traction ou de compression, caractérisé en ce que la longueur des couches intérieures en matériau fibreux (2) diminue tout d'abord en direction de la zone neutre (N), puis augmente à nouveau en direction de cette zone neutre (N), et en ce que des couches intercalaires en matériau fibreux (3), qui possèdent une longueur supérieure à celle des couches intérieures voisines en matériau fibreux (2), sont disposées aussi bien dans la région des couches intérieures dont la longueur diminue, que dans la région des couches intérieures dont la longueur augmente.

2. Ressort à lames selon la revendication 1, caractérisé en ce que la longueur d'au moins certaines des couches intercalaires en matériau fibreux (3) est sensiblement égale à la longueur des couches extérieures en matériau fibreux (1).

3. Ressort à lames selon la revendication 1 ou 2, caractérisé en ce qu'il est prévu des couches intercalaires en matériau fibreux (3') qui sont plus courtes que les couches extérieures en matériau fibreux (1).

4. Ressort à lames selon la revendication 3, caractérisé par des couches intercalaires en matériau fibreux (3') possédant une longueur étagée en direction de la zone neutre (N).

5. Ressort à lames selon l'une des revendications 1 à 4, caractérisé en ce que la somme du nombre des couches extérieures continues en matériau fibreux (1) et du nombre des couches intercalaires intérieures continues en matériau fibreux (3) est égale au moins approximativement à la moitié du nombre de toutes les couches en matériau fibreux (1, 2, 3).

6. Ressort à lames selon la revendication 5, caractérisé en ce qu'au moins 60 à 70 % des couches continues en matériau fibreux (1, 3) constituent des couches extérieures (1) et en ce que jusqu'à 30 à 40 % des couches continues en matériau fibreux (1, 3) constituent des couches intercalaires intérieures continues en matériau fibreux (3).

7. Ressort à lames selon l'une des revendications 1 à 6, caractérisé en ce que les couches en matériau fibreux (1, 2, 3) sont disposées d'une manière dissymétrique par rapport au plan longitudinal médian du ressort à lames.

8. Ressort à lames selon la revendication 7, caractérisé en ce qu'il est prévu, sur le côte du plan longitudinal médian associé à la zone de traction, un nombre supérieur de couches continues en matériau fibreux, à savoir un nombre supérieur de couches extérieures en matériau fibreux (1) et/ou de couches intercalaires en matériau fibreux (3).

9. Ressort à lames selon l'une des revendications 1 à 8, dans lequel une partie des couches en matériau fibreux (1") des zones de traction et de compression et/ou des couches intercalaires intérieures en matériau fibreux (3) est interrompue transversalement au voisinage des extrémités longitudinales, notamment au voisinage du dispositif d'application de la force et de préférence à des distances différentes de l'extrémité du ressort, caractérisé en ce que la distance entre les emplacements de séparation (4) de l'extrémité du ressort est d'autant plus grande que la couche extérieure en matériau fibreux (1") concernée est éloignée de la surface (0) du ressort.

10. Ressort à lames selon la revendication 9, caractérisé en ce qu'une ou plusieurs des couches extérieures continues en matériau fibreux (1") qui sont les plus éloignées de la surface (0) du ressort, et/ou une ou plusieurs des couches intercalaires continues en matériau fibreux (3), ont leur partie d'extrémité qui traverse les couches subdivisées en matériau fibreux (1") au niveau des emplacements de séparation (4), en se rapprochant de la surface du ressort.

## Claims

1. A leaf spring of fibre-plastics composite material, of a thickness which decreases in the longitudinal direction from a region of maximum thickness preferably towards both sides and of a width which is preferably the same over the entire length, comprising a plurality of fibre material layers (1, 2, 3) which are arranged in superposed relationship and which are embedded in a synthetic resin matrix, wherein there are provided outer fibre material layers (1) which extend over the entire length of the leaf spring and which are associated with the tension and compression zones, and shorter inner fibre material layers (2) of lengths which are stepped towards the neutral zone, and disposed in the region between the neutral zone (N) and the tension and compression zones respectively, in addition to the stepped inner fibre material layers (2), there are also fibre material intermediate layers (3, 3'), the length of which is greater than the length of the adjacent inner fibre material layers (2), characterised in that the length of the inner fibre material layers (2) firstly decreases towards the neutral zone (N) and then increases again as far as the neutral zone (N), and that disposed both in the inner layer region of decreasing length and also in the inner layer region of increasing length are fibre material intermediate layers (3) which are of greater length than the adjacen inner fibre material layers (2).

2. A leaf spring according to claim 1 characterised in that the length of at least individual ones of the fibre material intermediate layers (3) is substantially equal to the length of the outer fibre material layers (1).

3. A leaf spring according to claim 1 or claim 2 characterised in that there are provided fibre material intermediate layers (3') which are shorter than the outer fibre material layers (1).

4. A leaf spring according to claim 3 characterised by fibre material intermediate layers (3') of lengths which are stepped towards the neutral zone (N).

5. A leaf spring according to one of claims 1 to 4 characterised in that the sum of the number of outer fibre material layers (1) extending through the spring and the number of inner fibre material intermediate layers (3) extending through the spring is at least approximately equal to half the number of all fibre material layers (1, 2, 3).

6. A leaf spring according to claim 5 characterised in that of the fibre material layers (1, 3) extending through the spring, at least 60 to 70% are in the form of outer fibre material layers (1) and up to 30 to 40% are in the form of inner fibre material intermediate layers (3) extending through the spring.

7. A leaf spring according to one of claims 1 to 6 characterised in that fibre material layers (1, 2, 3) are arranged asymmetrically with respect to the longitudinal central plane of the leaf spring.

8. A leaf spring according to claim 7 characterised in that a large number of fibre material layers extending through the spring, namely outer fibre material layers (1) and/or fibre material intermediate layers (3), is provided on the side of the longitudinal central plane which is associated with the tension zone.

9. A leaf spring according to one of claims 1 to 8 wherein a part of the fibre material layers (1') in the tension and compression zones and/or the inner fibre material intermediate layers (3) is transversely interrupted in the region of the longitudinal ends, in particular in the region of the means for applying force to the spring and preferably at different spacings from the end of the spring characterised in that the spacing of the divisions (4) from the end of the spring increases in proportion to an increasing distance of the respective oter fibre material layer (1'') from the surface (0).

10. A leaf spring according to claim 9 characterised in that one or more of the outer fibre material layers (1''') extending through the spring and at the greatest spacing from the surface (0) of the spring and/or one or more of the fibre material intermediate layers (3) extending through the spring are passed with their end region through the divisions (4) of the separate fibre material layers (1'') closer to the surface of the spring.

Fig. 1

Fig. 2

Fig. 3

Fig. 4

Fig. 5